# EUROPEAN PATENT APPLICATION

(11) **EP 4 835 989 A1**
(43) Date of publication of application: **04.11.2026**
(21) Application number: 23962682.3
(22) Date of filing: 28.12.2023
(51) Int. Cl.: H01M 4/36, H01M 4/13, H01M 4/139, H01M 4/133

(54) **LITHIUM ION BATTERY NEGATIVE ELECTRODE MATERIAL, PREPARATION METHOD THEREFOR, AND LITHIUM ION BATTERY**

(71) Applicant: Shanghai Shanshan New Material Co., Ltd, Shanghai 201306 (CN)
(72) Inventor: LIU, Mengyang, Shanghai 201306 (CN); XU, Mengting, Shanghai 201306 (CN); WU, Xianbin, Shanghai 201306 (CN)
(74) Representative: karo IP
(86) International application number: PCT/CN2023/142797
(87) International publication number: WO 2025/138001

(57) **Abstract**

A lithium-ion battery negative electrode material, a preparation method therefor, and a lithium-ion battery. The negative electrode material comprises a graphite core and a carbon coating layer coated on the surface of a single-particle graphite core. The coating dominant eigenvalue of the carbon coating layer is Y=T/(J-Z). The theoretical carbon value of a coating agent forming the carbon coating layer is T%.The coating response value of the carbon coating layer is J=Dv50/Dv50_{aggregate}, wherein Dv50 represents the corresponding particle size when the volume distribution percentage of the negative electrode material reaches 50%, and Dv50_{aggregate} represents the corresponding particle size when the volume distribution percentage of the graphite core reaches 50%. The coating anchoring parameter of the carbon coating layer is Z=Dv95/Dv95_{aggregate}, wherein Dv95 represents the corresponding particle size when the volume distribution percentage of the negative electrode material reaches 95%, and Dv95_{aggregate} represents the corresponding particle size when the volume distribution percentage of the graphite core reaches 95%. The negative electrode material has better coating uniformity and charging and discharging capacity.

## Description

### TECHNICAL FIELD

This application relates to the field of lithium-ion batteries, and in particular to a lithium-ion battery negative electrode material and a preparation method thereof, and a lithium-ion battery.

### BACKGROUND

Commercialized lithium-ion battery negative electrode materials are mainly based on graphite. Graphite negative electrode materials mainly include artificial graphite, natural graphite, and mesophase graphite prepared from mesocarbon microbeads (MCMB). Due to the limitation of the theoretical capacity of positive and negative electrode materials, the overall energy density of lithium-ion batteries cannot be infinitely improved, so the energy anxiety can only be resolved by increasing the charging speed. With the rapid growth of lithium battery automobiles and energy storage stations in recent years and the updating of 5G mobile phones, the demand for corresponding graphite negative electrode materials is also doubling year by year. The demand for fast-charging graphite negative electrode materials has also grown explosively.

Traditional fast-charging negative electrode materials are mainly coated graphite materials or non-coated graphite materials with a particle size of less than 6µm. Conventional coated graphite materials are mostly coated on the graphite structure of secondary particles, which has the defect that the fast-charging performance cannot be further improved, and at the same time, the surface structure defects of secondary particle aggregates are numerous, making it impossible to achieve effective full coating. Non-coated graphite materials also have disadvantages such as poor processability and insufficient fast-charging performance.

Therefore, there is a need to provide a graphite negative electrode material with a higher rate of fast charging.

### SUMMARY

This application provides a lithium-ion battery negative electrode material and a preparation method thereof. The lithium-ion battery negative electrode material includes a graphite core and a carbon coating layer coated on the surface of the graphite core, such that the carbon coating layer achieves a more uniform and complete effect, and the carbon coating layer provides the surface of the negative electrode material with more lithium-ion diffusion channels, while the disordered carbon layer of the carbon coating layer enables the negative electrode material to have a lower surface resistance and a higher rate of fast-charging performance.

One aspect of the embodiments of this application provides a lithium-ion battery negative electrode material, comprising a graphite core and a carbon coating layer coated on the surface of a single-particle graphite core, wherein the coating dominant eigenvalue of the carbon coating layer is Y=T/(J-Z), wherein the theoretical carbon value of a coating agent forming the carbon coating layer is T%; the coating response value of the carbon coating layer is J=Dv50/Dv50_{aggregate}, wherein Dv50 represents the particle size corresponding to when the volume distribution percentage of the negative electrode material reaches 50%, and Dv50_{aggregate} represents the particle size corresponding to when the volume distribution percentage of the graphite core reaches 50%; the coating anchoring parameter of the carbon coating layer is Z=Dv95/Dv95_{aggregate}, wherein Dv95 represents the particle size corresponding to when the volume distribution percentage of the negative electrode material reaches 95%, and Dv95_{aggregate} represents the particle size corresponding to when the volume distribution percentage of the graphite core reaches 95%.

In some embodiments of this application, the range of T is 1-5, the range of J is 1.00-1.30, the range of Z is 1.00-1.30, and J is greater than Z, Y>8.5.

In some embodiments of this application, the characteristic response number A of residual carbon of the carbon coating layer is A=R_{capacity}/R_{aggregate capacity}×T/L+5×Dₜₐₚ/S_{specific surface}, wherein R_{capacity} is the button cell test capacity of the negative electrode material, R_{aggregate capacity} is the button cell test capacity of the graphite core, Dₜₐₚ is the tap density (g/cm³) of the negative electrode material, S_{specific surface} is the specific surface area of the negative electrode material, the theoretical carbon value of the coating agent of the negative electrode material is T%, and the Raman characteristic value of the negative electrode material is L=Id/Ig.

In some embodiments of this application, the characteristic response number A of residual carbon of the carbon coating layer is greater than or equal to 6.5 and less than or equal to 35.

In some embodiments of this application, the Raman characteristic value distribution range of the negative electrode material is 0.20-0.60. In some embodiments of this application, the oil absorption value OA range of the negative electrode material is 40-70.

In some embodiments of this application, the carbon coating layer is amorphous carbon, and the thickness of the carbon coating layer is 5-100nm.

The embodiments of this application further provide a preparation method of a lithium-ion battery negative electrode material, comprising: performing a pulverizing step, pulverizing a raw material to form a first powder; performing a graphitization step, converting the first powder into a graphite core; performing a coating step, coating a carbon coating agent on the surface of a single-particle graphite core; performing a carbonization step, converting the carbon coating agent into a carbon coating layer, wherein the coating dominant eigenvalue of the carbon coating layer is Y=T/(J-Z), wherein the theoretical carbon value of the coating agent is T%; the coating response value of the carbon coating layer is J=Dv50/Dv50_{aggregate}, wherein Dv50 represents the particle size corresponding to when the volume distribution percentage of the negative electrode material reaches 50%, and Dv50_{aggregate} represents the particle size corresponding to when the volume distribution percentage of the graphite core reaches 50%; the coating anchoring parameter of the carbon coating layer is Z=Dv95/Dv95_{aggregate}, wherein Dv95 represents the particle size corresponding to when the volume distribution percentage of the negative electrode material reaches 95%, and Dv95_{aggregate represents} the particle size corresponding to when the volume distribution percentage of the graphite core reaches 95%.

In some embodiments of this application, the range of T is 1-5, the range of J is 1.00-1.30, the range of Z is 1.00-1.30, and J is greater than Z, Y>8.5.

In some embodiments of this application, the characteristic response number A of residual carbon of the carbon coating layer is A=R_{capacity}/R_{aggregate capacity}×T/L+5×Dₜₐₚ/S_{specific surface}, wherein R_{capacity} is the button cell test capacity of the negative electrode material, R_{aggregate capacity} is the button cell test capacity of the graphite core, Dₜₐₚ is the tap density (g/cm³) of the negative electrode material, S_{specific surface} is the specific surface area of the negative electrode material, the theoretical carbon value of the coating agent of the negative electrode material is T%, and the Raman characteristic value of the negative electrode material is L=Id/Ig.

In some embodiments of this application, the characteristic response number A of residual carbon of the carbon coating layer is greater than or equal to 6.5 and less than or equal to 35.

In some embodiments of this application, the raw material is selected from needle coke with volatile matter of 5-7%, or petroleum coke with volatile matter of 8-11% and a sulfur content of 1.0-3.0%.

In some embodiments of this application, the volume distribution particle size of the first powder Dv50_{first powder} is 4-18µm, and the particle size distribution D of the first powder is in the range of 0.8-1.5, D=(Dv90_{first powder}-Dv10_{first powder})/Dv50_{first powder}, wherein Dv50_{first powder} represents the particle size corresponding to when the volume distribution percentage of the first powder reaches 50%, Dv90_{first powder} represents the particle size corresponding to when the volume distribution percentage of the first powder reaches 90%, and Dv10_{first powder} represents the particle size corresponding to when the volume distribution percentage of the first powder reaches 10%.

In some embodiments of this application, the carbon coating agent is selected from petroleum pitch with a softening point of 140-250°C, a resin with a molecular weight of less than 1000, or tar pitch with a softening point of less than 20°C, and the total theoretical residual carbon value of the carbon coating agent is preferably 1-5%.

In some embodiments of this application, the carbonization step is performed under constant temperature conditions, the carbonization temperature is 800-1300°C, and the constant temperature time is greater than 2 h and less than 12 h.

In some embodiments of this application, the oil absorption value OA range of the negative electrode material is 40-70.

In some embodiments of this application, the carbon coating layer is amorphous carbon, and the thickness of the carbon coating layer is 5-100nm.

The embodiments of this application further provide a lithium-ion battery, wherein a negative electrode is made from any one of the negative electrode materials according to the embodiments of this application.

Compared with the prior art, the preparation method of the negative electrode material according to the embodiments of this application, through the pulverizing step, enables the formed first powder to have a higher sphericity, which in turn enables the single-particle graphite core to achieve a more uniform and complete effect in the coating step; the negative electrode material after forming the carbon coating layer has more lithium-ion diffusion channels, while the disordered carbon layer of the carbon coating layer enables the negative electrode material to have a lower surface resistance, and the structure ensures the fast-charging capability of the negative electrode material. The single-particle negative electrode material is bonded together in the process of forming the battery negative electrode sheet, which can further increase the orientation of the material, ensure the pores of the single particles of the negative electrode material in the porous structure of the electrode sheet, increase the wettability of the electrolyte therein to the negative electrode material, further improve the fast-charging performance of the negative electrode material, and also provide better processability and liquid absorption performance.

### BRIEF DESCRIPTION OF DRAWINGS

The following drawings describe in detail the exemplary embodiments disclosed in this application. The same reference numerals in the several views of the drawings indicate similar structures. Those skilled in the art will understand that these embodiments are nonlimiting and exemplary, and the drawings are only for the purpose of illustration and description, and are not intended to limit the scope of this application. Embodiments in other manners may also accomplish the inventive intent of this application. It should be understood that the drawings are not drawn to scale. Wherein:

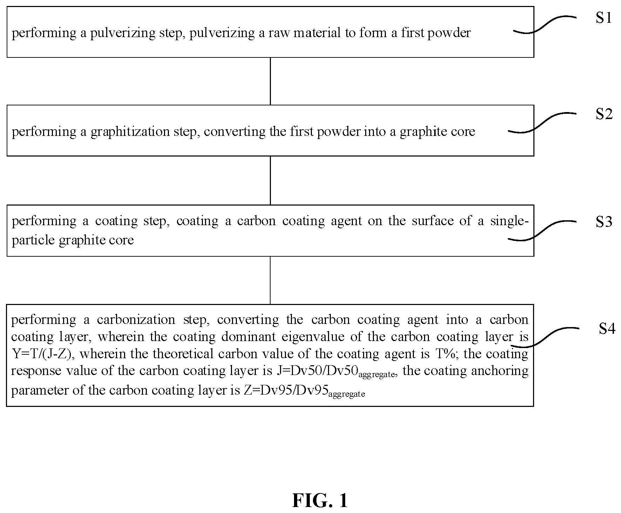

FIG. 1 is a schematic flow chart of the preparation method of the lithium-ion battery negative electrode material according to an embodiment of this application.

### DETAILED DESCRIPTION OF EMBODIMENTS

The following description provides specific application scenarios and requirements of this application, and is intended to enable those skilled in the art to make and use the contents of this application. For those skilled in the art, various partial modifications to the disclosed embodiments will be apparent, and the general principles defined herein can be applied to other embodiments and applications without departing from the spirit and scope of this application. Therefore, this application is not limited to the shown embodiments, but is consistent with the broadest scope of the claims.

One aspect of the embodiments of this application provides a lithium-ion battery negative electrode material, comprising a graphite core and a carbon coating layer coated on the surface of a single-particle graphite core, wherein the coating dominant eigenvalue of the carbon coating layer is Y=T/(J-Z), wherein the theoretical carbon value of a coating agent forming the carbon coating layer is T%; the coating response value of the carbon coating layer is J=Dv50/Dv50_{aggregate}, wherein Dv50 represents the particle size corresponding to when the volume distribution percentage of the negative electrode material reaches 50%, and Dv50_{aggregate} represents the particle size corresponding to when the volume distribution percentage of the graphite core reaches 50%; the coating anchoring parameter of the carbon coating layer is Z=Dv95/Dv95_{aggregate}, wherein Dv95 represents the particle size corresponding to when the volume distribution percentage of the negative electrode material reaches 95%, and Dv95_{aggregate} represents the particle size corresponding to when the volume distribution percentage of the graphite core reaches 95%.

In some embodiments of this application, the carbon coating layer is any one or more of hard carbon amorphous carbon or soft carbon amorphous carbon, for example, amorphous carbon, and the thickness of the carbon coating layer is 5-100nm, for example, 10nm, 15nm, 20nm, 25nm, 30nm, 40nm, 50nm, 60nm, 70nm, 80nm, 90nm, and the like. The coating dominant eigenvalue Y of the carbon coating layer represents the single-particle coating effect of the carbon coating layer on the graphite core during coating, and the larger the value, the better the coating effect, and the better the rate performance of the finished negative electrode material. Optionally, Y>8.5, and in some other embodiments, Y is greater than or equal to 9.0.

In some embodiments of this application, to ensure the single-particle coating effect of the carbon coating layer on the graphite core, i.e., the coating dominant eigenvalue is sufficiently high, the coating agent forming the carbon coating layer may include pitch-based and resin-based coating agents, preferably petroleum pitch with a softening point of 140-250°C, or a resin with a molecular weight of less than 1000, or tar pitch with a softening point of less than 20°C. The theoretical carbon value range of the coating agent forming the carbon coating layer is 1-5%, then the range of T is 1-5; optionally, the theoretical carbon value of the coating agent forming the carbon coating layer is 2-4%, then the range of T is 2-4.

In some embodiments of this application, the coating response value J of the carbon coating layer is J=Dv50/Dv50_{aggregate}, which characterizes the coating effect of single-particle coating during the process of coating the carbon coating agent on the surface of the single-particle graphite core, wherein Dv50 represents the particle size corresponding to when the volume distribution percentage of the negative electrode material reaches 50%, and Dv50_{aggregate} represents the particle size corresponding to when the volume distribution percentage of the graphite core reaches 50%. The aggregate mentioned in the embodiments of this application refers to the graphite core before being coated with the coating agent. Wherein, the numerical range of Dv50_{aggregate} is 7µm to 1 µm, and the numerical range of Dv50 is 7µm to 13.5µm. Optionally, the range of the coating response value J of the carbon coating layer is 1.00-1.30.

In some embodiments of this application, the coating anchoring parameter Z of the carbon coating layer is Z=Dv95/Dv95_{aggregate}, which characterizes the coating effect of the carbon coating layer on the single-particle graphite core, wherein Dv95 represents the particle size corresponding to when the volume distribution percentage of the negative electrode material reaches 95%, and Dv95_{aggregate} represents the particle size corresponding to when the volume distribution percentage of the graphite core reaches 95%. Optionally, the range of the coating anchoring parameter Z of the carbon coating layer is 1.00-1.30, and J is greater than Z.

In some embodiments of this application, the characteristic response number A of residual carbon of the carbon coating layer is A=R_{capacity}/R_{aggregate capacity}×T/L+5×Dₜₐₚ/S_{specific surface}, wherein R_{capacity} is the button cell test capacity of the negative electrode material, R_{aggregate} capacity is the button cell test capacity of the graphite core, Dₜₐₚ is the tap density (g/cm³) of the negative electrode material, which characterizes the roughness of the negative electrode material and the pore size between particles, S_{specific surface} is the specific surface area of the negative electrode material, the theoretical carbon value of the coating agent forming the carbon coating layer is T%, and the Raman characteristic value of the negative electrode material is L=Id/Ig.

The characteristic response number of residual carbon of the carbon coating layer represents the coating uniformity of the carbon coating layer and the processability of the negative electrode material for electrode sheets. The processability refers to the performance of the negative electrode material in the slurry preparation and screening process during the manufacturing of the negative electrode sheet. In some embodiments of this application, the characteristic response number A of residual carbon of the carbon coating layer is greater than or equal to 6.5 and less than or equal to 35, which has excellent coating uniformity and electrode sheet processability.

In some embodiments of this application, the Raman characteristic value distribution range of the negative electrode material is 0.20-0.60, optionally, the Raman characteristic value distribution range of the negative electrode material is 0.20-0.50. The Raman characteristic value of the negative electrode material is the median of Id/Ig of 2500 scanning points in the Raman spectrum. The Raman characteristic value characterizes the coating uniformity of the carbon coating layer of the negative electrode material, and the larger the Raman characteristic value, the worse the coating uniformity.

In some embodiments of this application, the oil absorption value OA range of the negative electrode material is 40-70. The oil absorption value characterizes the processability of the negative electrode material in the slurry preparation step of battery manufacturing. The lower the value, the higher the processability, and the higher the yield rate during processing.

The embodiments of this application further provide a preparation method of a lithium-ion battery negative electrode material, comprising: performing a pulverizing step, pulverizing a raw material to form a first powder; performing a graphitization step, converting the first powder into a graphite core; performing a coating step, coating a carbon coating agent on the surface of a single-particle graphite core; performing a carbonization step, converting the carbon coating agent into a carbon coating layer, wherein the coating dominant eigenvalue of the carbon coating layer is Y=T/(J-Z), wherein the theoretical carbon value of the coating agent is T%; the coating response value of the carbon coating layer is J=Dv50/Dv50_{aggregate}, wherein Dv50 represents the particle size corresponding to when the volume distribution percentage of the negative electrode material reaches 50%, and Dv50_{aggregate} represents the particle size corresponding to when the volume distribution percentage of the graphite core reaches 50%; the coating anchoring parameter of the carbon coating layer is Z=Dv95/Dv95_{aggregate}, wherein Dv95 represents the particle size corresponding to when the volume distribution percentage of the negative electrode material reaches 95%, and Dv95_{aggregate} represents the particle size corresponding to when the volume distribution percentage of the graphite core reaches 95%.

The pulverizing step according to the embodiments of this application is a raw material processing step, which may include heat treatment and pulverizing and shaping of the raw material. The main purpose of the pulverizing step is to pulverize the raw material to achieve the desired designed particle size.

The raw material according to the embodiments of this application is selected from coke-based materials. Different coke-based materials have different properties, which directly affect the morphology after pulverization and the capacity, specific surface area, and the like of the finally formed negative electrode material. In some embodiments of this application, to ensure the coating effect of the carbon coating layer in the formed negative electrode material, the raw material is selected from needle coke with volatile matter of 5-7%, or petroleum coke with volatile matter of 8-11% and a sulfur content of 1.0-3.0%, or pitch, and the like. Volatile matter refers to the mass percentage content of the substance, excluding moisture in the raw material, that escapes as gas and liquid when a portion of the organic matter and minerals in the raw material decomposes under heating at a certain temperature in the absence of air.

The heat treatment, for example, comprises subjecting the raw material such as needle coke, petroleum coke, or pitch to heat treatment at a temperature of 0-1400°C, so that the structure and physicochemical properties of the raw material undergo certain changes. After the heat treatment, the raw material can be pulverized and shaped by using, without limitation, a mechanical mill or a roller mill and other methods to form a first powder. Optionally, the heat treatment temperature is 500°C-1400°C.

In some embodiments of this application, the particle size distribution D of the first powder is in the range of 0.8-1.5, D=(Dv90_{first powder}-Dv10_{first powder})/Dv50_{first powder}, wherein Dv50_{first powder} represents the particle size corresponding to when the volume distribution percentage of the first powder reaches 50%, Dv90_{first powder} represents the particle size corresponding to when the volume distribution percentage of the first powder reaches 90%, and Dv10_{first powder} represents the particle size corresponding to when the volume distribution percentage of the first powder reaches 10%.

In some embodiments of this application, the volume distribution particle size of the first powder Dv50_{first powder} is 4-18µm, optionally, the Dv50_{first powder} is in the range of 6-13 µm. In some embodiments, the Dv50_{first powder} is, for example, 5µm, 8µm, 10µm, 12µm, and the like.

Performing the graphitization step to convert the first powder into a graphite core. The graphitization step according to the embodiments of this application refers to subjecting the first powder to pyrolysis at a high temperature to form a graphite structure with a high degree of crystallinity, and this graphite structure is the graphite core of the negative electrode material according to the embodiments of this application. During the graphitization process, the intermolecular distance of the graphite material decreases, and the lattice structure becomes more ordered. This structural change enables the graphite material to have better electrical conductivity and cycling stability. After the graphitization step, the formed graphite core mainly includes carbon element, and may also include a trace amount of O element. In the embodiments of this application, the equipment for performing the graphitization step includes, without limitation, a crucible furnace, a box furnace, an internal series furnace, and the like. The graphitization temperature is higher than 2700°C, for example, the graphitization temperature is 2800-3200°C, and optionally, the graphitization temperature is 2900-3100°C.

Performing the coating step, coating a carbon coating agent on the surface of a single-particle graphite core. The coating step according to the embodiments of this application includes solid-phase coating treatment and liquid-phase coating treatment, that is, the carbon coating agents used include solid-phase coating agents and liquid-phase coating agents. The solid-phase coating treatment includes directly using mixed pitch or resin-based materials as the coating agent to coat on the surface of the graphite core; the liquid-phase coating treatment can use a horizontal reactor or a vertical reactor to heat and melt pitch or resin-based coating agents and then coat them on the surface of the graphite core; alternatively, a solvent with a low coking value can be used to prepare a liquid coating agent at room temperature, and a fusion machine can be used to coat it on the surface of the graphite core.

The coating step is the core process for the preparation method of the negative electrode material according to the embodiments of this application to achieve the fast-charging capability of the negative electrode material. To ensure the coating effect, i.e., the coating dominant eigenvalue is sufficiently high, the carbon coating agent is preferably a pitch-based or resin-based coating agent. In some embodiments of this application, the carbon coating agent is selected from petroleum pitch with a softening point of 140-250°C, a resin with a molecular weight of less than 1000, or tar pitch with a softening point of less than 20°C, and the theoretical carbon value of the coating agent of the carbon coating layer is preferably 1-5%, for example, 2-4%. The coating equipment used in the embodiments of this application can be selected from a kneader, a vertical mixer, a ribbon mixer, a horizontal reactor, a vertical reactor, a roomtemperature fusion machine, and the like, and more preferably a vertical mixer, a horizontal reactor, a fusion machine, and the like.

Performing the carbonization step to convert the carbon coating agent into a carbon coating layer. After the carbonization step, the carbon coating agent is fixed on the surface of the single-particle graphite core, while avoiding secondary adhesion caused by carbonization of the graphite core particles. In the embodiments of this application, since the degree of order of the graphite core is higher than that of the carbon coating layer, the carbon coating layer can improve the fast-charging performance of the negative electrode material. For example, when the carbon coating layer is amorphous carbon, the amorphous carbon can increase the intercalation speed of lithium ions on the surface of the negative electrode, and can improve the pulse charging performance of the negative electrode material. Therefore, the directional design of the coating amount of the carbon coating layer can fulfill the pulse charging requirement of the battery cell made from the negative electrode material. In some embodiments of this application, the carbon coating layer is hard carbon or soft carbon amorphous carbon or a mixture of both, for example, amorphous carbon, and the thickness of the carbon coating layer is 5-100nm, for example, 10nm, 15nm, 20nm, 25nm, 30nm, 40nm, 50nm, 60nm, 70nm, 80nm, 90nm, and the like.

The carbonization treatment step according to the embodiments of this application can use carbonization equipment such as a rotary kiln, a roller hearth kiln, or a tunnel kiln, and the carbonization step is performed under constant temperature conditions, for example, at a temperature of 800-1300°C, with a constant temperature time of greater than 2h and less than 12h, thereby improving the electrochemical performance of the carbon coating layer. The preferred carbonization equipment according to the embodiments of this application is a roller hearth kiln. The reaction temperature of the carbonization step is preferably 1000-1200°C, and the reaction time is preferably greater than 3h and less than 8h.

After performing the carbonization treatment step, to better achieve industrialization and mass production, the method according to the embodiments of this application may further include a finished product processing step, that is, completing the processing of the finished product stage through sieving and demagnetization treatment to meet the requirements for shipment.

The coating dominant eigenvalue Y of the carbon coating layer according to the embodiments of this application is Y=T/(J-Z), wherein the theoretical carbon value of the coating agent forming the carbon coating layer is T%; J=Dv50/Dv50_{aggregate}, wherein Dv50 represents the particle size corresponding to when the volume distribution percentage of the negative electrode material reaches 50%, and Dv50_{aggregate} represents the particle size corresponding to when the volume distribution percentage of the graphite core reaches 50%; Z=Dv95/Dv95_{aggregate}, wherein Dv95 represents the particle size corresponding to when the volume distribution percentage of the negative electrode material reaches 95%, and Dv95_{aggregate} represents the particle size corresponding to when the volume distribution percentage of the graphite core reaches 95%.

The coating dominant eigenvalue Y of the carbon coating layer represents the single-particle coating effect of the carbon coating layer on the graphite core during coating, and the larger the value, the better the coating effect, and the better the rate performance of the finished negative electrode material. Optionally, Y>8.5, and in some other embodiments, Y is greater than or equal to 9.0.

In some embodiments of this application, the theoretical carbon value range of the coating agent forming the carbon coating layer is 1-5%, then the range of T is 1-5; optionally, the theoretical carbon value of the coating agent forming the carbon coating layer is 2-4%, then the range of T is 2-4.

In some embodiments of this application, the coating response value J of the carbon coating layer is J=Dv50/Dv50_{aggregate}, which characterizes the coating effect of the coating agent forming the carbon coating layer in achieving single-particle coating on the graphite core during the coating process, wherein Dv50 represents the particle size corresponding to when the volume distribution percentage of the negative electrode material reaches 50%, and Dv50_{aggregate} represents the particle size corresponding to when the volume distribution percentage of the graphite core reaches 50%. The aggregate mentioned in the embodiments of this application refers to the graphite core before being coated with the coating agent. Wherein, the numerical range of Dv50_{aggregate} is 7µm to 11µm, and the numerical range of Dv50 is 7µm to 13.5µm. Optionally, the range of the coating response value J of the carbon coating layer is 1.00-1.30.

In some embodiments of this application, the coating anchoring parameter Z of the carbon coating layer is Z=Dv95/Dv95_{aggregate}, which characterizes the coating effect of the carbon coating layer on the single-particle graphite core, wherein Dv95 represents the particle size corresponding to when the volume distribution percentage of the negative electrode material reaches 95%, and Dv95_{aggregate} represents the particle size corresponding to when the volume distribution percentage of the graphite core reaches 95%. Optionally, the range of the coating anchoring parameter Z of the carbon coating layer is 1.00-1.30, and J is greater than Z.

In some embodiments of this application, the characteristic response number A of residual carbon of the carbon coating layer is A=R_{capacity}/R_{aggregate capacity}×T/L+5×Dₜₐₚ/S_{specific surface}, wherein R_{capacity} is the button cell test capacity of the negative electrode material, R_{aggregate capacity} is the button cell test capacity of the graphite core, Dₜₐₚ is the tap density (g/cm³) of the negative electrode material, S_{specific surface} is the specific surface area of the negative electrode material, the theoretical carbon value of the coating agent of the negative electrode material is T%, and the Raman characteristic value of the negative electrode material is L=Id/Ig.

Lithium battery button cell testing is a method for evaluating the capacity and performance of a lithium battery. By measuring the voltage change of the battery under specific conditions, the capacity of the battery can be determined, and the performance and lifespan of the battery can be evaluated.

The characteristic response number of residual carbon of the carbon coating layer represents the coating uniformity of the carbon coating layer and the processability of the negative electrode material for electrode sheets. The processability refers to the performance of the negative electrode material in the slurry preparation and screening process during the manufacturing of the negative electrode sheet. In some embodiments of this application, the characteristic response number A of residual carbon of the carbon coating layer is greater than or equal to 6.5 and less than or equal to 35, preferably A is greater than or equal to 6.5 and less than or equal to 25, which has excellent coating uniformity and electrode sheet processability.

In some embodiments of this application, the Raman characteristic value distribution range of the negative electrode material is 0.20-0.60, optionally, the Raman characteristic value distribution range of the negative electrode material is 0.20-0.50. The Raman characteristic value of the negative electrode material is the median of Id/Ig of 2500 scanning points in the Raman spectrum. The Raman characteristic value characterizes the coating uniformity of the carbon coating layer of the negative electrode material, and the larger the Raman characteristic value, the worse the coating uniformity.

In some embodiments of this application, the oil absorption value OA range of the negative electrode material is 40-70, preferably 45-60. The oil absorption value characterizes the processability of the negative electrode material in the slurry preparation step of battery manufacturing. The lower the value, the higher the processability, and the higher the yield rate during processing.

The preparation method of the negative electrode material according to the embodiments of this application, through the pulverizing step, enables the formed first powder to have a higher sphericity, which enables the single-particle graphite core to achieve a more uniform and complete effect in the coating step; the negative electrode material after forming the carbon coating layer has more lithium-ion diffusion channels, while the disordered carbon layer of the carbon coating layer enables the negative electrode material to have a lower surface resistance, and the structure ensures the fast-charging capability of the negative electrode material. The negative electrode material is randomly stacked in the process of forming the battery negative electrode sheet, which can further increase the orientation of the material, ensure the pores of the single particles of the negative electrode material in the porous structure of the electrode sheet, increase the wettability of the electrolyte therein to the negative electrode material, and further improve the fast-charging performance of the negative electrode material.

This application further provides a lithium-ion battery negative electrode material prepared by any of the above preparation methods for a lithium-ion battery negative electrode material.

The following further discusses the embodiments of this application with reference to Examples 1-6 and Comparative Examples 1-3.

### Example 1-6:

### Example 1

Step (1): Needle coke with a volatile matter of 6.5% was pulverized to obtain a first powder with Dv50_{first powder} equal to 10.9µm and a particle size distribution D=(Dv90_{first powder}-Dv10_{first powder})/Dv50 of the first powder=1.20;
Step (2): The first powder formed in step (1) was subjected to graphitization treatment at a maximum temperature of 3050°C to convert the first powder into a graphite core;
Step (3): A graphite core with a mass of M1 and pitch with a mass of M2 and a softening point of 205°C were used, based on the coking value of the pitch, the theoretical residual carbon value was converted to 2.0% (theoretical residual carbon value=M2×coking value of pitch/M1), and the graphite core and pitch were placed into a horizontal reactor for coating treatment to obtain a pre-coated material with the carbon coating agent coated on the surface of the single-particle graphite core;
Step (4): The pre-coated material from step (3) was subjected to carbonization treatment in a roller hearth kiln at a constant temperature of 1150°C for a carbonization time of 5 h. After cooling, it was taken out of the kiln, and after mixing and screening, the negative electrode material with the carbon coating layer coated on the surface of the graphite core was obtained as Sample 1.

### Example 2:

In Example 1, the Dv50_{first powder} in step (1) was changed to 8.0, the particle size distribution D=(Dv90_{first powder}-Dv10_{first powder})/Dv50_{first powder}=1.25, the softening point in step (3) was changed to 155°C, the horizontal reactor was changed to a vertical reactor, and the other conditions and proportioning parameters were unchanged to obtain Sample 2.

### Example 3

In Example 1, the needle coke in step (1) was changed to petroleum coke with a volatile matter of 10.1% and a sulfur content of 2.2%, the softening point in step (3) was changed to 240°C, and the carbonization temperature in step (4) was changed to 1250°C, the constant temperature time was changed to 3h, and the other conditions and proportioning parameters were unchanged to obtain Sample 3.

### Example 4

In Example 1, the Dv50_{first powder} in step (1) was changed to 13.0µm, the graphitization temperature in step (2) was changed to 2950°C, the horizontal reactor in step (3) was changed to a vertical reactor, and the other conditions and proportioning parameters were unchanged to obtain Sample 4.

### Example 5

In Example 1, the pitch with a mass of M2 and a softening point of 205°C in step (3) was changed to a resin with a molecular weight of 600, and the other conditions and proportioning parameters were unchanged to obtain Sample 5.

### Example 6

In Example 1, the theoretical residual carbon value in step (3) was changed to 4.0%, and the equipment horizontal reactor was changed to a fusion machine, and the other conditions and proportioning parameters were unchanged to obtain Sample 6.

### Comparative Example 1

In Example 1, the particle size distribution D in step (1) was changed to D=(Dv90 _{first powder}-Dv10_{first powder})/Dv50_{first powder}=1.90, and the other conditions and proportioning parameters were unchanged to obtain Comparative Sample 1.

### Comparative Example 2

In Example 1, the particle size distribution D in step (1) was changed to 1.5, the theoretical residual carbon value in step (3) was changed to 6.0%, and the horizontal reactor was changed to a mixer, and the other conditions and proportioning parameters were unchanged to obtain Comparative Sample 2.

### Comparative Example 3

In Example 1, the pitch with a mass of M2 and a softening point of 205°C in step (3) was changed to a resin with a molecular weight of 2000, and the theoretical residual carbon value was changed to 1%, and the other conditions and proportioning parameters were unchanged to obtain Comparative Sample 3.

The graphite core materials and the negative electrode materials after the carbon coating layer was coated on the surface of the graphite core from Examples 1-6 and Comparative Examples 1-3 were subjected to particle size measurement, tap density testing, specific surface area testing, and oil absorption value testing, and the test results were calculated as shown in Table 1, wherein the particle size measurement method is: using a laser diffraction particle size distribution measuring instrument, the particle size distribution was measured according to the laser diffraction method for particle size distribution.

The tap density test method is: the test sample is placed in a graduated cylinder of a certain volume, the vibration frequency is 250 times/min, the number of vibrations is 3000 times, and after the vibration is completed, the tap density is calculated based on the volume after the vibration is completed. The specific surface area test is performed by the nitrogen physical adsorption method, using a specific surface area tester to test the sample and obtain the specific surface area value. The oil absorption value test is performed by an oil absorption value tester.

Materials from Examples 1-6 and Comparative Examples 1-3 were respectively taken for confocal Raman spectroscopy (Renishaw) testing. The G peak ("Graphite" band) is located at approximately 1580 cm⁻¹, corresponding to the E2g vibration mode, and the D peak ("Defect" band) is located at approximately 1360 cm⁻¹, corresponding to the disordered carbon ring structure. 2500 points were scanned to calculate the Raman characteristic value L=Id/Ig, and distribution statistics were performed.

Materials from Examples 1-6 and Comparative Examples 1-3 were respectively taken to prepare button cells for performance testing. The button cell test method is: conductive carbon black is added to a carboxymethyl cellulose (CMC) aqueous solution, then the negative electrode material from the example or comparative example is added, and finally styrenebutadiene rubber (SBR) is added, and after stirring uniformly, the slurry is uniformly coated on a copper foil using a coating machine to make an electrode sheet. The coated electrode sheet is placed in a vacuum drying oven at a temperature of 110°C for vacuum drying for 4 hours, and the electrode sheet is taken out and rolled on a roller press for standby. The simulated battery is assembled in a German Braun glove box filled with argon gas, the electrolyte is 1M LiPF₆+EC:DEC:DMC=1:1:1 (volume ratio), and a metal lithium sheet is used as the counter electrode. The capacity test is performed on an Arbin BT2000 battery tester, with a charge-discharge voltage range of 0.005 to 2.0 V and a charge-discharge rate of 0.1 C. The coating dominant eigenvalue Y and the coating characteristic response number were calculated by comparing the electrochemical performance of the materials prepared from the examples and comparative examples.

The coating dominant eigenvalue Y of the carbon coating layer is Y=T/(J-Z), wherein the theoretical carbon value of the coating agent forming the carbon coating layer is T%; J=Dv50/Dv50_{aggregate}, wherein Dv50 represents the particle size corresponding to when the volume distribution percentage of the negative electrode material reaches 50%, and Dv50_{aggregate} represents the particle size corresponding to when the volume distribution percentage of the graphite core reaches 50%; Z=Dv95/Dv95_{aggregate}, wherein Dv95 represents the particle size corresponding to when the volume distribution percentage of the negative electrode material reaches 95%, and Dv95_{aggregate} represents the particle size corresponding to when the volume distribution percentage of the graphite core reaches 95%.

In some embodiments of this application, the range of T is 1-5, the range of J is 1.00-1.30, the range of Z is 1.00-1.30, Y>8.5.

In some embodiments of this application, the characteristic response number A of residual carbon of the carbon coating layer is A=R_{capacity}/R_{aggregate capacity}×T/L+5×Dₜₐₚ/S_{specific surface}, wherein R_{capacity} is the button cell test capacity of the negative electrode material, R_{aggregate} capacity is the button cell test capacity of the graphite core, Dₜₐₚ is the tap density (g/cm³) of the negative electrode material, S_{specific surface} is the specific surface area of the negative electrode material, the theoretical carbon value of the coating agent of the negative electrode material is T%, and the Raman characteristic value of the negative electrode material is L=Id/Ig.

**Table 1: Comparison of Performance Indicators of Examples and Comparative Examples**

| **Sample** | **Dv50 (µm)** | **Tap density (g/cm³)** | **Specific surface area (m²/g)** | **Oil absorption value** | **Raman characteristic value L** | **Coating dominant eigenvalue Y** | **Characteristic response number A** |
|---|---|---|---|---|---|---|---|
| Example 1 | 11.5 | 1.10 | 1.01 | 53.0 | 0.31 | 38.25 | 11.86 |
| Example 2 | 8.3 | 1.04 | 1.10 | 53.9 | 0.35 | 37.74 | 10.41 |
| Example 3 | 11.3 | 1.09 | 0.98 | 52.1 | 0.33 | 31.00 | 11.42 |
| Example 4 | 12.9 | 1.11 | 1.04 | 45.1 | 0.30 | 31.66 | 11.96 |
| Example 5 | 12.5 | 1.07 | 1.25 | 54.7 | 0.41 | 28.77 | 9.14 |
| Example 6 | 13.1 | 1.04 | 0.98 | 53.2 | 0.32 | 15.58 | 11.52 |
| Comp. Ex. 1 | 14.0 | 1.10 | 1.31 | 72.0 | 0.39 | 8.22 | 10.62 |
| Comp. Ex. 2 | 14.9 | 0.89 | 1.00 | 77.1 | 0.72 | 8.15 | 12.53 |
| Comp. Ex. 3 | 15.3 | 0.91 | 1.58 | 67.4 | 0.57 | 5.74 | 4.62 |

From Table 1, it can be known that: the coating dominant eigenvalues of the samples prepared in Examples 1-6 of this application are all above 8.5, indicating that the coating effect is good, and the oil absorption values and coating characteristic response numbers are all within the corresponding ranges, indicating that the negative electrode material according to the embodiments of this application has high processability in the back-end battery processing stage; while the coating dominant eigenvalues of the samples prepared in Comparative Examples 1-3 are less than 8.5, and at the same time, the oil absorption values of the samples prepared in Comparative Examples 1-3 are all relatively high, indicating that the samples prepared in the comparative examples have poor processability as negative electrode materials.

Finally, it should be understood that the embodiments of the application disclosed herein are illustrations of the principles of the embodiments of this application. Other modified embodiments are also within the scope of this application. Therefore, the embodiments disclosed in this application are merely examples and not limitations. Those skilled in the art can adopt alternative configurations according to the embodiments in this application to implement the application herein. Therefore, the embodiments of this application are not limited to those embodiments that have been precisely described in the application.

## Claims

1. A lithium-ion battery negative electrode material, comprising a graphite core and a carbon coating layer coated on the surface of a single-particle graphite core, wherein the coating dominant eigenvalue of the carbon coating layer is Y=T/(J-Z), wherein the theoretical carbon value of a coating agent forming the carbon coating layer is T%; the coating response value of the carbon coating layer is J=Dv50/Dv50_{aggregate}, wherein Dv50 represents the particle size corresponding to when the volume distribution percentage of the negative electrode material reaches 50%, and Dv50_{aggregate} represents the particle size corresponding to when the volume distribution percentage of the graphite core reaches 50%; the coating anchoring parameter of the carbon coating layer is Z=Dv95/Dv95_{aggregate}, wherein Dv95 represents the particle size corresponding to when the volume distribution percentage of the negative electrode material reaches 95%, and Dv95_{aggregate} represents the particle size corresponding to when the volume distribution percentage of the graphite core reaches 95%.

2. The lithium-ion battery negative electrode material according to claim 1, wherein the range of T is 1-5, the range of J is 1.00-1.30, the range of Z is 1.00-1.30, and J is greater than Z, Y>8.5.

3. The lithium-ion battery negative electrode material according to claim 1, wherein the characteristic response number A of residual carbon of the carbon coating layer is A=R_{capacity}/R_{aggregate capacity}×T/L+5×Dₜₐₚ/S_{specific surface}, wherein R_{capacity} is the button cell test capacity of the negative electrode material, R_{aggregate capacity} is the button cell test capacity of the graphite core, Dₜₐₚ is the tap density of the negative electrode material, S_{specific surface} is the specific surface area of the negative electrode material, the theoretical carbon value of the coating agent forming the carbon coating layer is T%, and the Raman characteristic value of the negative electrode material is L=Id/Ig.

4. The lithium-ion battery negative electrode material according to claim 3, wherein the characteristic response number A of residual carbon of the carbon coating layer is greater than or equal to 6.5 and less than or equal to 35.

5. The lithium-ion battery negative electrode material according to claim 3, wherein the Raman characteristic value distribution range of the negative electrode material is 0.20-0.60.

6. The lithium-ion battery negative electrode material according to claim 1, wherein the oil absorption value OA range of the negative electrode material is 40-70.

7. The lithium-ion battery negative electrode material according to claim 1, wherein the carbon coating layer is amorphous carbon, and the thickness of the carbon coating layer is 5-100nm.

8. A preparation method of a lithium-ion battery negative electrode material, comprising: a pulverizing step, pulverizing a raw material to form a first powder; a graphitization step, converting the first powder into a graphite core; a coating step, coating a carbon coating agent on the surface of a single-particle graphite core; a carbonization step, converting the carbon coating agent into a carbon coating layer, wherein the coating dominant eigenvalue of the carbon coating layer is Y=T/(J-Z), wherein the theoretical carbon value of the coating agent is T%; the coating response value of the carbon coating layer is J=Dv50/Dv50_{aggregate}, wherein Dv50 represents the particle size corresponding to when the volume distribution percentage of the negative electrode material reaches 50%, and Dv50_{aggregate} represents the particle size corresponding to when the volume distribution percentage of the graphite core reaches 50%; the coating anchoring parameter of the carbon coating layer is Z=Dv95/Dv95_{aggregate}, wherein Dv95 represents the particle size corresponding to when the volume distribution percentage of the negative electrode material reaches 95%, and Dv95_{aggregate} represents the particle size corresponding to when the volume distribution percentage of the graphite core reaches 95%.

9. The preparation method of the lithium-ion battery negative electrode material according to claim 8, wherein the range of T is 1-5, the range of J is 1.00-1.30, the range of Z is 1.00-1.30, and J is greater than Z, Y>8.5.

10. The preparation method of the lithium-ion battery negative electrode material according to claim 8, wherein the characteristic response number A of residual carbon of the carbon coating layer is A=R_{capacity}/R_{aggregate capacity}×T/L+5×Dₜₐₚ/S_{specific surface}, wherein R_{capacity} is the button cell test capacity of the negative electrode material, R_{aggregate capacity} is the button cell test capacity of the graphite core, Dₜₐₚ is the tap density of the negative electrode material, S_{specific surface} is the specific surface area of the negative electrode material, the theoretical carbon value of the coating agent forming the carbon coating layer is T%, and the Raman characteristic value of the negative electrode material is L=Id/Ig.

11. The preparation method of the lithium-ion battery negative electrode material according to claim 10, wherein the characteristic response number A of residual carbon of the carbon coating layer is greater than or equal to 6.5 and less than or equal to 35.

12. The preparation method of the lithium-ion battery negative electrode material according to claim 10, wherein the Raman characteristic value distribution range of the negative electrode material is 0.20-0.60.

13. The preparation method of the lithium-ion battery negative electrode material according to claim 8, wherein the raw material is needle coke with volatile matter of 5-7%, or petroleum coke with volatile matter of 8-11% and a sulfur content of 1.0-3.0%.

14. The preparation method of the lithium-ion battery negative electrode material according to claim 8, wherein the volume distribution particle size of the first powder Dv50_{first powder} is 4-18µm, and the particle size distribution D of the first powder is in the range of 0.8-1.5, D=(Dv90_{first powder}-Dv10_{first powder})/Dv50_{first powder}, wherein Dv50_{first powder} represents the particle size corresponding to when the volume distribution percentage of the first powder reaches 50%, Dv90_{first powder} represents the particle size corresponding to when the volume distribution percentage of the first powder reaches 90%, and Dv10_{first powder} represents the particle size corresponding to when the volume distribution percentage of the first powder reaches 10%.

15. The preparation method of the lithium-ion battery negative electrode material according to claim 8, wherein the carbon coating agent is petroleum pitch with a softening point of 140-250°C, a resin with a molecular weight of less than 1000, or tar pitch with a softening point of less than 20°C, and the total theoretical residual carbon value of the carbon coating agent is 1-5%.

16. The preparation method of the lithium-ion battery negative electrode material according to claim 8, wherein the carbonization step is performed under constant temperature conditions, the carbonization temperature is 800-1300°C, and the constant temperature time is greater than 2 h and less than 12 h.

17. The preparation method of the lithium-ion battery negative electrode material according to claim 8, wherein the oil absorption value OA range of the negative electrode material is 40-70.

18. The preparation method of the lithium-ion battery negative electrode material according to claim 1, wherein the carbon coating layer is amorphous carbon, and the thickness of the carbon coating layer is 5-100nm.

19. A lithium-ion battery, wherein a negative electrode is made from the negative electrode materials according to any one of claims 1-9.
